# EUROPÄISCHE PATENTANMELDUNG

(11) **EP 1 288 384 A1**
(43) Veröffentlichungstag der Anmeldung: **05.03.2003**
(21) Anmeldenummer: 02019620.0
(22) Anmeldetag: 03.09.2002
(51) Int. Cl.: E04B 9/16

(54) **Ankerwinkel**

(30) Priorität: 04.09.2001 DE 20114555 U
(71) Anmelder: HUWER KG, 55758 Oberreidenbach (DE)
(72) Erfinder: Huwer, Thomas, 55758 Oberreidenbach (DE)
(74) Vertreter: Erb, Henning

(57) **Zusammenfassung**

Ein Ankerwinkel dient zum Verbinden sich kreuzender Metallschienen (10, 12) und besitzt unter nach innen umgebogene Schenkelenden (20) der unteren Metallschiene (10) einhängbare Haltenasen (18) an einem Tragteil sowie eine Biegelasche (30), die aus einer Ausgangslage in eine Schenkelenden (16) der oberen Metallschiene (12) untergreifende Haltelage umbiegbar ist. Um eine Vorausrichtung der Metallschienen mit Möglichkeit zur Lagekorrektur zu ermöglichen, ist die Biegelasche (30) in der Ausgangslage mit Bezug auf das Tragteil (26) abgewinkelt und bei in die untere Metallschiene (10) eingehängten Haltenasen federnd mit einem an der Biegelasche vorgesehenen Haken über einen Schenkel der oberen Metallschiene (12) einrastbar.

## Beschreibung

Die Erfindung befaßt sich mit einem Ankerwinkel zur Verbindung sich kreuzender Metallschienen, die beispielsweise als sogenanntes CD-Profil ausgebildet sind, wobei der Ankerwinkel an einem Tragteil Haltenasen, die unter die nach innen umgebogenen Schenkelenden der unteren Metallschiene einhängbar sind, und eine Biegelasche aufweist, die aus einer Ausgangslage in eine Haltelage umbiegbar ist, in welcher sie die umgebogenen Schenkelenden der oberen Metallschiene untergreift.

Ein derartiges Verbindungselement ist beispielsweise aus der EP 0 596 193 A1 bekannt. Der im Ausgangszustand flache Ankerwinkel wird dort nach dem Einhängen unter die Schenkelenden der unteren Metallschiene um die Schenkel der oberen Metallschiene umgebogen. Nachteilig bei der Verwendung dieses Verbindungselements ist, daß nach dem Umbiegen der Biegelasche mit dem ausgestanzten Haken bereits ein sehr fester Halt der Metallschienen zueinander gegeben ist, so daß eine nachträgliche Lagekorrektur nur noch schwer möglich ist. In der Ausgangsstellung hingegen bietet das Verbindungselement keinerlei Halt der beiden Metallschienen aneinander.

Die Aufgabe der Erfindung besteht darin, einen Ankerwinkel der eingangs beschriebenen Art dahingehend zu verbessern, daß ohne erhöhten Arbeitsaufwand bei der Montage eine Vorausrichtung der Metallschienen zueinander mit gegebener Möglichkeit für eine Lagekorrektur geschaffen wird.

Erfindungsgemäß wird die Aufgabe durch einen Ankerwinkel der eingangs beschriebenen Art gelöst, bei welchem die Biegelasche in der Ausgangslage mit Bezug auf das Tragteil abgewinkelt ist und bei in die untere Metallschiene eingehängten Haltenase mit einem an der Biegelasche vorgesehenen Haken federnd über einen Schenkel der oberen Metallschiene einschnappbar ist.

Der erfindungsgemäße Ankerwinkel bietet durch eine besonders einfache Maßnahme die Möglichkeit, die beiden Halteschienen vorläufig zueinander zu fixieren, wobei das Eigengewicht der unteren Metallschiene problemlos auch von dem noch nicht in seine Haltelage umgebogenen Ankerwinkel aufgenommen werden kann, da die Beanspruchung des entstehenden Gerüstes, beispielsweise beim Abhängen von Decken, erst nachträglich durch das Montieren der Deckenelemente entsteht. Der erfindungsgemäße Ankerwinkel bietet eine erhebliche Erleichterung der Montage, da zunächst die Metallschienen provisorisch sehr schnell aufgebaut, ausgerichtet und abschließend in einem Arbeitsgang durch Umbiegen der Biegelaschen aller verwendeten Ankerwinkel fixiert werden können.

Die Ankerwinkel können montagefertig mit bereits abgewinkelter Biegelasche in der Ausgangslage geliefert werden, es ist aber auch denkbar, sie flach mit einer Sollbiegestelle zu fertigen, die es dem Anwender erlaubt, ohne großen Aufwand die Biegelasche in die Winkellage der Ausgangsstellung umzubiegen.

Auch das Einsetzen der Ankerwinkel selbst wird erleichtert, da diese mit einer Hand eingesetzt werden und nach dem Aufschieben der Haken über den Schenkel selbst eine Lage finden, in der sie nicht mehr aus den Schienen herausfallen können, während bisher der Halt erst durch das Umbiegen der Biegelasche erreicht wurde.

Vorzugsweise hintergreift der Haken in der Haltelage die Schenkelenden. Damit genügt ein Haken, um einerseits das Rastelement in der Vorraststellung und andererseits dem aus dem Stand der Technik bereits bekannten Haken zum Schutz vor Herausziehen zu bilden.

Besonders bevorzugt ist eine Ausführungsform, bei welcher der Haken durch eine teilkegelförmige Ausstellung in der Biegelasche gebildet ist. Eine derartige Ausbildung des Hakens bietet zunächst den Vorteil, daß die schräge Wandfläche das Aufstecken bis zum Einschnappen in die Vorraststellung vereinfacht, während die Kegelform in Endzustand aufgrund ihrer besonders hohen Biegesteifigkeit in der Lage ist, hohe Kräfte verformungsfrei aufzunehmen, wodurch ein sicherer Halt gegen Herausziehen bei Überbeanspruchung des Ankerwinkels gegeben ist. Daher eignet sich ein derartig ausgebildeter Haken auch zum Einsatz bei konventionellen Ankerwinkeln ohne Vorrastfunktion.

In einer bevorzugten Weiterbildung der Erfindung ist vorgesehen, daß der Biegebereich der Biegelasche von der Knickstelle zwischen dem Tragteil und der Biegelasche versetzt liegt. Dadurch ist es möglich, die Knickstelle einerseits hinreichend steif auszubilden, so daß beim Einschnappen in die Vorraststellung keine bleibenden Verbiegungen auftreten und ein sicherer Halt der unteren Metallschiene gegeben ist. Andererseits kann der Biegebereich beispielsweise durch das. Vorsehen einer Sollbiegestelle weich ausgebildet sein, um das abschließende Umbiegen der Biegelaschen um die Schenkelenden zu vereinfachen. Vorzugsweise ist der Biegebereich durch eine Ausstanzung im Bereich des Hakens ausgebildet.

Besonders zweckmäßig ist eine Ausführungsform der Erfindung, bei welcher die Biegelasche in der Ausgangslage rechtwinklig zum Tragteil abgewinkelt ist. Ein derartiger Winkel ist zweckmäßig für die Lagerung und erlaubt ein sicheres Voreinrasten der Ankerwinkel, wobei die Biegelaschen auch in der Vorraststellung gut sichtbar bleiben, so daß der Monteur sofort erkennen kann, welche Biegelaschen bereits umgebogen sind und welche sich noch in der Vorraststellung befinden.

Ein besonders guter Halt in der Vorraststellung ergibt sich bei einer noch weiteren bevorzugten Ausführungsform der Erfindung, bei welcher die Knickstelle in einem bestimmten Abstand zu den Haltenasen angeordnet ist, so daß die Biegelasche bei in der unteren Metallschiene eingehängten Haltenase mit geringem Spiel zu der Oberkante der Schenkelenden der o-beren Metallschiene liegt.

Zur Verbesserung der Trageigenschaften kann ferner vorgesehen sein, daß das Tragteil eine zwischen den Haltenasen über die gesamte Breite verlaufende Sicke aufweist. Eine zusätzliche Stabilität kann auch durch eine gegebenenfalls vorhandene Bohrung im Tragteil zum Durchstecken einer Befestigungsschraube oder dergleichen erreicht werden.

Nachfolgend wird anhand der beigefügten Zeichnungen näher auf ein Ausführungsbeispiel der Erfindung eingegangen. Es zeigen:
- Fig. 1: eine Schrägansicht zweier Kreuzverbindungen von CD-Metallprofilen;
- Fig. 2: einen Querschnitt einer Kreuzverbindung mit Ankerwinkeln in einer Vorraststellung und
- Fig. 3: die Kreuzverbindung gemäß Fig. 2 mit in die endgültige Haltelage umgebogenen Ankerwinkeln.

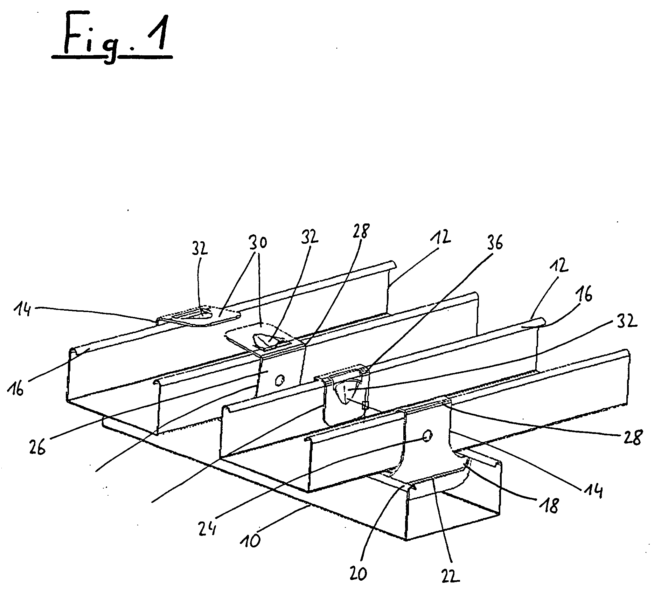

In Fig. 1 sind in Schrägansicht zwei Kreuzverbindungen einer unteren Metallschiene 10, die als sogenanntes CD-Profil ausgebildet ist, mit jeweils einer oberen Metallschiene 12 mit gleicher Profilform dargestellt, wobei die Kreuzverbindungen jeweils mit Hilfe eines Paares von Ankerwinkeln 14 realisiert sind. In einer in der Abbildung links hinten gezeigten Kreuzverbindung befindlichen Vorraststellung der Ankerwinkel 14 können die Metallschienen 10, 12 zueinander ausgerichtet werden, wobei die Ankerwinkel die untere Metallschiene 10 bereits an der oberen Metallschiene 12 halten. In der rechts vorne dargestellten Haltelage sind die Ankerwinkel um die nach innen umgebogenen Schenkelenden 16 der oberen Metallschiene 12 umgebogen, wodurch ein im wesentlichen spielfreier Halt zwischen der unteren Metallschiene 10 und der oberen Metallschiene 12 erreicht wird.

Die Ankerwinkel 14 sind in der unteren Metallschiene 10 mit Hilfe von beidseitig vorgesehenen Haltenasen 18 verankert, die unter die nach innen umgebogenen Schenkelenden 20 der unteren Metallschiene 10 eingehängt sind. Eine Verstärkungssicke 22 sorgt für eine zusätzliche Stabilität, während mit Hilfe einer Bohrung 24 in den Ankerwinkeln 14 eine zusätzliche Verschraubung der Ankerwinkel 14 mit den Schenkeln der oberen Metallschiene 12 zur Verbesserung der Stabilität ermöglicht ist.

Eine in Fig. 1 gezeigte Konstruktion mit sich kreuzenden Metallschienen wird beispielsweise zum Abhängen von Decken verwendet, wobei die Deckenelemente an den unten liegenden Metallschienen 10 befestigt werden.

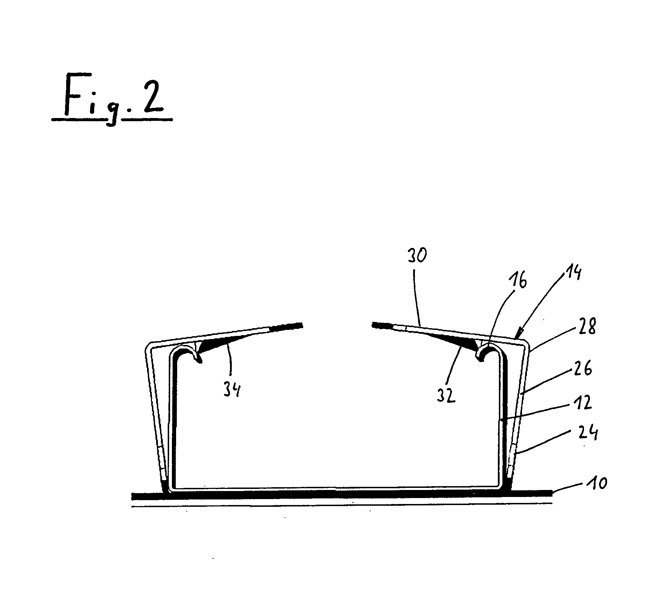

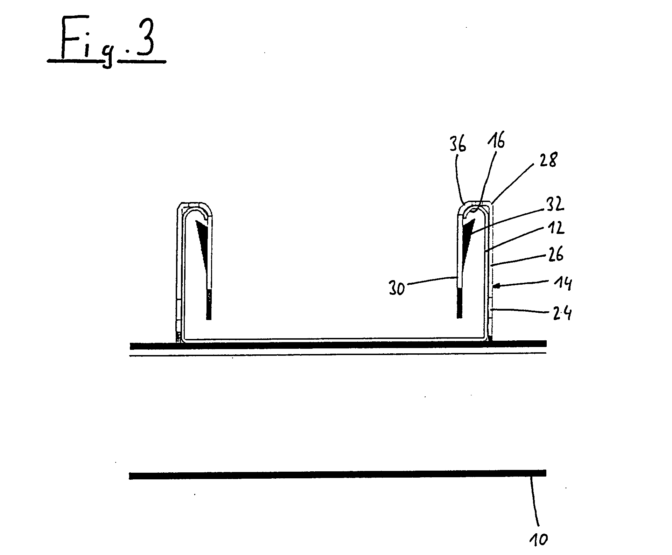

In Fig. 2 und 3 sind die Kreuzverbindungen mit den Ankerwinkeln in der Vorraststellung bwz. der endgültigen Haltelage im Querschnitt dargestellt.

Um Lagekorrekturen zwischen den Metallschienen 10, 12 noch vornehmen zu können, wenn beide Schienen bereits aneinander festgelegt sind, ermöglichen die Ankerwinkel 14 zunächst eine vergleichsweise lose Verbindung der oberen Metallschiene 12 und der unteren Metallschiene 10 in einer Vorraststellung. Die Ankerwinkel 14 bestehen hierzu aus einem Tragteil 26, in dessen Fußbereich die in die untere Metallschiene eingehängten Haltenasen 18 angeformt sind, und einer an einer Knickstelle 28 im wesentlichen senkrecht zum Tragteil 26 abgewinkelten Biegelasche 30. In den Biegelaschen 30 sind Haken 32 vorgesehen, die beim Stanzen des Ankerwinkels 14 als kegelförmige Ausstellungen ausgebildet werden. Die Schrägfläche 34 dieser kegelförmigen Ausstellung erlaubt ein einfaches Aufschieben der Ankerwinkel in die in Fig. 2 gezeigte Stellung, wobei die Haken 32 federnd über die Schenkelenden 16 schnappen, so daß sich bei leichtem Spiel der Metallschienen 10, 12 zueinander bereits ein sicherer Halt ergibt, da einerseits die Haltenasen 18 unter die Schenkelenden 20 der unteren Metallschiene 10 greifen und andererseits die Haken 32 hinter den Schenkelenden 16 der oberen Metallschiene 12 eingerastet sind. In dieser Position sind ohne weiteres Lagekorrekturen der beiden Metallschienen 10, 12 zueinander möglich.

Nach der erfolgten Ausrichtung der Metallschienen zueinander werden die Biegelaschen 30 nach unten umgebogen (siehe Fig. 3), wobei ein Sollbiegebereich 36 zwischen den Haken 32 und den Knickstellen 28 vorgesehen ist. Die Haken 32 hintergreifen dabei unter die Schenkelenden 16 der oberen Metallschiene 12 und bilden so einen sicheren Schutz gegen Herausziehen bei Überbeanspruchung. Gegebenenfalls können durch die Bohrungen 24 in den Tragteilen 26 der Ankerwinkel 14 Befestigungsschrauben eingedreht werden, um so für einen zusätzlichen Halt zu sorgen.

Die Ankerwinkel sind kostengünstig als Blechstanzteil gefertigt und werden mit rechtwinklig abgewinkelter Biegelasche geliefert, so.daß sie montagefertig zum Aufstecken in die in Fig. 2 gezeigte Vorraststellung vorbereitet sind.

## Patentansprüche

1. Ankerwinkel zum Verbinden sich kreuzender Metallschienen (10, 12), die beispielsweise als sogenanntes CD-Profil ausgebildet sind, wobei der Ankerwinkel (14) an einem Tragteil (26) Haltenasen (18), die unter die nach innen umgebogenen Schenkelenden (20) der unteren Metallschiene (10) einhängbar sind, und eine Biegelasche (30) aufweist, die aus einer Ausgangslage in eine Haltelage umbiegbar ist, in welcher sie die umgebogenen Schenkelenden (16) der oberen Metallschiene (12) untergreift, **dadurch gekennzeichnet, daß** die Biegelasche (30) in der Ausgangslage mit Bezug auf das Tragteil (26) abgewinkelt ist und bei in die untere Metallschiene (10) eingehängten Haltenasen federnd mit einem an der Biegelasche vorgesehenen Haken über einen Schenkel der oberen Metallschiene (12) einrastbar ist.

2. Ankerwinkel nach Anspruch 1, **dadurch gekennzeichnet, daß** der Haken in der Haltelage die Schenkelenden (16) hintergreift.

3. Ankerwinkel nach Anspruch 1 oder 2, **dadurch gekennzeichnet, daß** der Haken durch eine teilkegelförmige Ausstellung in der Biegelasche (30) gebildet ist.

4. Ankerwinkel nach einem der Ansprüche 1 bis 3, **dadurch gekennzeichnet, daß** der Biegebereich (36) der Biegelasche (30) von der Knickstelle (28) zwischen dem Tragteil (26) und der Biegelasche (30) versetzt liegt.

5. Ankerwinkel nach Anspruch 4, **dadurch gekennzeichnet, daß** der Biegebereich (36) durch eine Ausstanzung im Bereich des Hakens (32) ausgebildet ist.

6. Ankerwinkel nach einem der vorhergehenden Ansprüche, **dadurch gekennzeichnet, daß** die Biegelasche (30) in der Ausgangslage rechtwinklig zum Tragteil (26) abgewinkelt ist.

7. Ankerwinkel nach einem der vorhergehenden Ansprüche, **dadurch gekennzeichnet, daß** die Knickstelle (28) in einem bestimmten Abstand zu den Haltenasen (18) angeordnet ist, so daß die Biegelasche (30) bei in der unteren Metallschiene (10) eingehängten.Haltenasen (18) mit geringem Spiel zu der Oberkante der Schenkel der oberen Metallschiene (12) liegt.

8. Ankerwinkel nach einem der vorhergehenden Ansprüche, **dadurch gekennzeichnet, daß** der Tragteil (26) eine zwischen den Haltenasen (18) über die gesamte Breite verlaufende Sicke (22) aufweist.

9. Ankerwinkel nach einem der vorhergehenden Ansprüche, **dadurch gekennzeichnet, daß** das Tragteil (26) eine Bohrung (24) aufweist.

10. Ankerwinkel nach einem der vorhergehenden Ansprüche, **dadurch gekennzeichnet, daß** er als Blechstanzteil gefertigt ist.

11. Ankerwinkel zum Verbinden sich kreuzender Metallschienen (10, 12), die beispielsweise als sogenanntes CD-Profil ausgebildet sind, wobei der Ankerwinkel (14) an einem Tragteil (26) Haltenasen (18), die unter die nach innen umgebogenen Schenkelenden (20) der unteren Metallschiene (10) einhängbar sind, und eine Biegelasche (30) mit einem Haken (32) aufweist, die aus einer Ausgangslage in eine Haltelage umbiegbar ist, in welcher der Haken (32) die umgebogenen Schenkelenden (16) der oberen Metallschiene (12) untergreift, **dadurch gekennzeichnet, daß** der Haken durch eine teilkegelförmige Ausstellung gebildet ist.
